# EUROPÄISCHE PATENTSCHRIFT

(11) **EP 3 815 775 B1**
(45) Veröffentlichungstag und Bekanntmachung des Hinweises auf die Patenterteilung: **07.06.2023**
(21) Anmeldenummer: 20202976.5
(22) Anmeldetag: 21.10.2020
(51) Int. Cl.: B01F 27/072, B01F 27/192, B01F 27/213, B01F 27/806, F16D 1/116, F16D 1/02

(54) **INDUSTRIELLE MISCHMASCHINE**
INDUSTRIAL MIXING MACHINE
MÉLANGEUR INDUSTRIEL

(30) Priorität: 29.10.2019 DE 202019105995 U
(43) Veröffentlichungstag der Anmeldung: 05.05.2021
(73) Patentinhaber: Dr. HERFELD GmbH & Co. KG, 58809 Neuenrade (DE)
(72) Erfinder: RÜBERG, Wolfgang, 58708 Menden (DE)
(74) Vertreter: Haverkamp Patentanwälte PartG mbB

(56) Entgegenhaltungen:
- EP-A1- 2 140 931
- WO-A1-98/40157
- CH-A- 86 413
- US-A- 5 049 013
- US-A- 5 865 538

## Beschreibung

Die Erfindung betrifft eine industrielle Mischmaschine zum Mischen eines pulvrigen oder granulatförmigen, in einem Behälter enthaltenen Mischgutes umfassend einen als Deckel ausgebildeten Mischkopf zum Verschlie-βen der oberseitigen Öffnung des das zu mischende Mischgut enthaltenden Behälters, welcher Mischkopf ein Antriebsaggregat und eine von dem Antriebsaggregat rotatorisch angetriebene, den Mischkopf durchgreifende Antriebswelle zum Antreiben eines eine Werkzeugwelle aufweisenden Mischwerkzeuges umfasst, welche Werkzeugwelle zum Übertragen einer Rotationsbewegung der Antriebswelle auf die Werkzeugwelle mittels einer Anschlussmechanik lösbar drehmomentschlüssig an die Antriebswelle angeschlossen ist.

Bei derartigen Mischmaschinen handelt es sich um industrielle Mischer, mit denen beispielsweise Kunststoffgranulatgemische oder Pulvermischungen für die Farbindustrie vermischt werden. Dieses wird für die Herstellung von Vormischungen für die Pulverlackierung ebenso benötigt wie zum Bereitstellen von sogenannten Masterbatches oder zur Bereitstellung von Additiven. Genauso gut kann eine solche Mischmaschine zum Vermischen von pulvrigen Nahrungsmitteln, wie beispielsweise Backmischungen oder dergleichen, eingesetzt werden. Eine solche Mischmaschine verfügt über einen Mischkopf. Dieser trägt außenseitig ein Antriebsaggregat, welches eine den Mischkopf durchgreifende Antriebswelle rotatorisch antreibt. Der Mischkopf ist dabei als Deckel ausgebildet, um einen das zu mischende Mischgut enthaltenden Behälter verschließen zu können. Dabei kann der als Deckel dienende Mischkopf nach Art einer Platte ebenso ausgeführt sein wie nach Art einer Glocke. Die Auslegung des Mischkopfes ist abhängig von dem mit der Mischmaschine durchgeführten Mischprozess. An die Antriebswelle ist ein Mischwerkzeug angeschlossen. Das Mischwerkzeug verfügt über eine Werkzeugwelle, auf der die eigentlichen Mischflügel sitzen. Die Werkzeugwelle ist zum Übertragen einer Rotationsbewegung von der Antriebswelle auf diese drehmomentschlüssig an die Antriebswelle angeschlossen. Der Anschluss des Mischwerkzeuges an die Antriebswelle des Mischkopfes ist lösbar, damit in Abhängigkeit von der Größe des das Mischgut enthaltenden Behälters, dem darin befindlichen Mischgut und/oder dem vorgesehenen Mischverfahren das für den jeweiligen Mischprozess geeignete bzw. vorgesehene Mischwerkzeug verwendet werden kann. Zum Anschließen des Mischwerkzeuges an die Antriebswelle verfügt die Mischmaschine über eine entsprechende Anschlussmechanik.

Bei vorbekannten Mischmaschinen wird die Werkzeugwelle mit der Antriebswelle über einen Gewindeanschluss verbunden. Die Gewinderichtung dieses Anschlussgewindes ist gegensinnig zu der Rotationsrichtung des Mischwerkzeuges bei dem Vorgang des Mischens. Hierdurch ist ein unbeabsichtigtes Lösen der Werkzeugwelle von der Antriebswelle während des Mischprozesses wirksam verhindert. Zum Anschließen und Lösen der Werkzeugwelle von der Antriebswelle verfügen diese außenseitig über Werkzeugangriffsflächen, sodass beide Wellen durch Aufbringen eines entsprechenden Drehmomentes gegeneinander verspannt und auch voneinander gelöst werden können.

Da sich die Schnittstelle zwischen der Antriebswelle und der Werkzeugwelle notwendigerweise auf der von dem Antriebsaggregat abgewandten Seite des Mischkopfes und somit innerhalb des durch den Mischkopf geschlossenen Mischbehälters befindet, müssen bei einem Werkzeugwechsel die voneinander gelösten Gewinde genauso wie die gesamte Innenseite des Mischkopfes gereinigt werden. Dies ist erforderlich, damit eine mit der Mischmaschine zu mischende Mischgutcharge, die eine andere Zusammensetzung aufweist als die zuvor mit der Mischmaschine gemischte Mischgutcharge, nicht durch Rückstände des zuvor gemischten Mischgutes kontaminiert wird. Eine Verunreinigung der Gewindegänge durch Mischgut ist kaum zu vermeiden, wobei ein Eintrag von Verschmutzungen oftmals beim Werkzeugwechsel erfolgt. In die Gewindegänge, insbesondere das als Innengewinde ausgeführte Anschlussgewinde der Antriebswelle, eingedrungene Mischgutpartikel sind aus diesen nur schwer vollständig entfernbar. Neben dem Verunreinigungsaspekt kann es in Abhängigkeit von dem zu mischenden Mischgut auch vorkommen, dass durch dieses die in Eingriff gestellten Gewindegänge festfressen und bei dem Versuch des Lösens der Werkzeugwelle von der Antriebswelle der das Innengewinde der Antriebswelle kämmende Gewindeschaft der Werkzeugwelle abreißt. Bei einer Mischmaschine, bei der der Mischkopf mit dem daran angeschlossenen Mischwerkzeug von oben in einen Mischbehälter zum Durchführen des Mischvorganges eingefahren wird, wie dieses bei Sack- und Fassmischern der Fall ist, ist es mitunter erforderlich, das Mischwerkzeug nach Abschluss des Mischvorganges zum Herausbringen desselben aus dem auf den Mischflügeln ruhenden Mischgut entgegen der Rotationsrichtung der Antriebswelle zum Durchführen des Mischvorganges anzutreiben, mithin dieses aus dem Mischgut quasi schraubenartig herauszudrehen. Ein Herausziehen des Mischwerkzeuges mit seinen Mischflügeln ohne eine gleichzeitige Drehbewegung ist nicht gewünscht, da dann auf den Mischflügeln befindliches Mischgut aus dem Mischbehälter herausgeholt wird und eine Kontamination der Mischmaschine und der Mischmaschinenumgebung nicht zu vermeiden ist. Bei einem Herausdrehen des Mischwerkzeuges kann es allerdings vorkommen, dass sich die in Eingriff gestellten Gewindeabschnitte der Mischwerkzeugwelle und der Antriebswelle lösen und in einem solchen Fall das Mischwerkzeug entweder von der Antriebswelle gelockert aus dem Behälter herausgefahren wird oder die Werkzeugwelle vollständig von der Antriebswelle gelöst wird. Eine als Sack- und Fassmischer ausgeführte Mischmaschine der vorbeschriebenen Art ist aus DE 20 2008 012 827 U1 bekannt.

US 5 049 013 A zeigt eine industrielle Mischmaschine entsprechend dem Oberbegriff des Anspruchs 1 und offenbart einen Mischer zum Mischen von Flüssigkeiten und flüssigen Suspensionen. Dieser Stand der Technik beschreibt einen transportablen Mischer zum Mischen von Flüssigkeiten und flüssigen Suspensionen. Dieser vorbekannte Mischer verfügt über einen Motor mit einem daran angeschlossenen Getriebe, welche beiden Komponenten auf einer Gehäuseplatte eines Gehäuses sitzen. Unterhalb der Gehäuseplatte befindet sich ein Kupplungsmechanismus zum Anschließen einer Mischwerkzeuge tragenden Werkzeugwelle. Gegenstand dieses Standes der Technik ist, dass die Betätigungsmittel zum Verriegeln bzw. Lösen der Werkzeugwelle an bzw. von der Antriebswelle gegenüber einem unerwünschten Zugriff beim Betrieb des Mischers geschützt sind. Mittels eines Klemmmechanismus wird der Mischer am oberen Rand eines Behälters befestigt.

Ausgehend von dem vorstehend diskutierten Stand der Technik liegt der Erfindung daher die Aufgabe zugrunde, eine eingangs genannte, gattungsgemäße Mischmaschine dergestalt weiterzubilden, dass ein lösbarer Anschluss der Werkzeugwelle an die Antriebswelle unter Vermeidung bzw. Verminderung der zu dem Stand der Technik aufgezeigten Nachteile möglich ist.

Gelöst wird diese Aufgabe erfindungsgemäß durch eine eingangs genannte, gattungsgemäße Mischmaschine, bei der die Antriebswelle als Kupplungsteil einen den Mischkopf durchgreifenden Werkzeugwellenanschluss umfasst, in den oder auf den die Werkzeugwelle mittels ihrem komplementär zu dem Werkzeugwellenanschluss der Antriebswelle ausgeführten Kupplungsteil mittels einer translatorischen Bewegung ein- bzw. aufsteckbar ist, wobei die beiden komplementären Kupplungsteile eine nicht rotationssymmetrische Querschnittsgeometrie zur drehmomentschlüssigen Ineingriffstellung derselben aufweisen, und bei der der Werkzeugwellenanschluss auf der Antriebsaggregatseite des Mischkopfes eine Verriegelungseinrichtung zum Verriegeln des mit dem Werkzeugwellenanschluss der Antriebswelle in Eingriff gestellten Kupplungsteils der Werkzeugwelle umfasst.

Bei dieser Mischmaschine erfolgt der Anschluss der Werkzeugwelle an die Antriebswelle durch eine nicht drehende, translatorische Montagebewegung. Gleiches gilt für eine Demontagebewegung. Aus diesem Grunde verfügt weder die Werkzeugwelle mit ihrem Kupplungsabschnitt noch die Anschlusswelle mit ihrem Werkzeugwellenanschluss über einen Innengewindeabschnitt mit seinen in axialer Richtung zahlreichen hintereinanderliegenden Hinterschnitten, aus denen darin eingedrungenes Mischgut nicht oder nur mit entsprechendem Aufwand entfernt werden kann. Bei dieser neuartigen Mischmaschine wird das Kupplungsteil der Werkzeugwelle je nach Auslegung des Werkzeugwellenanschlusses der Antriebswelle des Mischkopfes entweder in eine entsprechende Werkzeugwellenaufnahme der Antriebswelle eingesteckt, wenn der Werkzeugwellenanschluss als Hohlwelle ausgeführt ist, oder auf den Werkzeugwellenanschluss aufgesteckt, wenn das Kupplungsteil der Werkzeugwelle als Hohlwellenabschnitt ausgeführt ist. Zum drehmomentschlüssigen Anschluss der beiden Kupplungsteile, und zwar des Werkzeugwellenanschlusses der Antriebswelle und dem Kupplungsteil der Werkzeugwelle, weisen diese an ihren in Eingriff gestellten Oberflächen eine nicht rotationssymmetrische Querschnittsgeometrie auf. Die nicht rotationssymmetrische Querschnittsgeometrie erstreckt sich in längsaxialer Richtung und bildet daher keine nicht oder nur schwer zugänglichen Hinterschnitte. Die Querschnittsgeometrie der komplementären Kupplungsteile kann als Mehrkant, beispielsweise als Sechskant, ausgeführt sein. Eine kostengünstige Drehmitnahme kann dadurch erreicht werden, dass eines der beiden Kupplungsteile eine radial abragende und in axialer Richtung verlaufende Mitnehmerrippe trägt, während das andere Kupplungsteil eine Mitnehmernut mit komplementärer Querschnittsgeometrie aufweist. Die nicht rotationssymmetrische Querschnittsgeometrie der beiden komplementären Kupplungsteile braucht sich nur auf einen Abschnitt zu erstrecken, in dem die beiden Kupplungsteile miteinander in Eingriff gestellt sind. Durch die Ineingriffstellung der beiden Kupplungsteile ist die Werkzeugwelle drehmomentschlüssig an die Antriebswelle angeschlossen. Eine solche drehmomentschlüssige Ineingriffstellung der beiden Kupplungsteile erfolgt somit ohne zusätzliche Zwischenwellenstücke.

Zum Halten der in Eingriff gestellten Kupplungsteile in ihrer Eingriffsstellung verfügt der Mischkopf über eine Verriegelungseinrichtung zum Verriegeln des mit dem Werkzeugwellenanschluss der Antriebswelle in Eingriff gestellten Kupplungsteils der Werkzeugwelle. Die Verriegelungseinrichtung sitzt, typischerweise drehmomentschlüssig auf der Antriebswelle und kann dem Werkzeugwellenanschluss zugerechnet werden. Die Verriegelungseinrichtung braucht grundsätzlich kein Drehmoment von der Antriebswelle auf die Werkzeugwelle zu übertragen, sondern dient nur zum Fixieren des Kupplungsteils der Werkzeugwelle an dem Werkzeugwellenanschluss der Antriebswelle in längsaxialer Richtung. Insofern ist bei diesem Mischer in geschickter Weise gegenüber dem Stand der Technik eine funktionale Trennung zwischen der Funktionalität einer Drehmomentübertragung von der Antriebswelle auf die Werkzeugwelle - einerseits - und der Funktionalität der Verriegelung der beiden Wellen in ihrer Ineingriffstellung - andererseits - vorgenommen worden. Dieses hat mehrere Vorteile. Zum einen erlaubt dieses, die Verriegelungseinrichtung auf der Antriebsaggregatseite des Mischkopfes anzuordnen, sodass diese sich außerhalb des Behälters während des Mischvorganges befindet. Die Verriegelungseinrichtung ist daher nicht in Kontakt mit dem Mischgut. Aus diesem Grunde braucht bei der Auslegung der Verriegelungseinrichtung auch keine Rücksicht auf eine einfache Reinigungsmöglichkeit genommen zu werden. Vorteilhaft ist zudem, dass die beiden durch die beiden drehmomentschlüssig miteinander verbundenen Wellen durch die Verriegelungseinrichtung miteinander verriegelt sind und verriegelt bleiben, und zwar unabhängig von der Drehrichtung der Antriebswelle und damit der die Mischflügel tragenden Werkzeugwelle. Daher kann die Werkzeugwelle auch gegensinnig zur Rotationsrichtung beim Mischen zum Herausdrehen der Mischflügel aus dem Mischgut nach Beendigung eines Mischprozesses angetrieben werden, ohne befürchten zu müssen, dass sich der Anschluss der Werkzeugwelle an die Antriebswelle gelockert oder gar gelöst hat.

Dieser Anschluss der Werkzeugwelle an die Antriebswelle der Mischmaschine kann bei unterschiedlichen Mischmaschinen eingesetzt werden. Auch wenn in einer ersten Ausgestaltung eine solche Mischmaschine als Sack- und Fassmischer ausgeführt ist, kann dieses Konzept auch bei Mischmaschinen eingesetzt werden, die als Containermischer ausgeführt sind.

Gemäß einer Ausgestaltung einer solchen Mischmaschine ist die Verriegelungseinrichtung durch zumindest eine Verriegelungsklinke verwirklicht. In der Verriegelungsstellung dieser Verriegelungsklinke greift deren Riegel, der in radialer Richtung verstellbar ist, in eine Riegelfalle des Kupplungsteils der Werkzeugwelle ein. Die Verriegelungseinrichtung verfügt über eine Lösemechanik, um bei einem Mischwerkzeugwechsel, die Verriegelungsklinke verstellen zu können, dass der Riegel aus der Riegelfalle herausbewegt wird. Eine solche Verstellung der Verriegelungsklinke kann je nach Auslegung der Verriegelungseinrichtung manuell vorgenommen werden, sodass auch keinerlei Werkzeuge bei einem Wechsel der Mischwerkzeuge benötigt werden. Die Eingriffsstellung des Riegels in die Riegelfalle des Kupplungsteils der Werkzeugwelle ist typischerweise durch eine Feder gesichert. Andere Sicherungsmaßnahmen sind ebenfalls möglich. Das Vorsehen einer Feder zum Sichern der Eingriffsstellung des Riegels in die Riegelfalle hat zum Vorteil, dass zum Herausbewegen des Riegels aus der Riegelfalle dieses nur gegen die Kraft dieser Feder vorgenommen werden muss und nicht zusätzliche Sicherungsteile bewegt werden müssen.

In einer vorteilhaften Ausgestaltung einer solchen Verriegelungsklinke ist diese der erste Arm eines zweiarmigen Hebels. Die Achse des Hebeldrehpunktes verläuft typischerweise tangential zur Drehachse der Antriebswelle. Der zweite Arm dient als Betätigungshandhabe. Wird der zweite Arm in radialer Richtung zur Drehachse der Antriebswelle bzw. seines Werkzeugwellenanschlusses bewegt, wird dadurch der in die Riegelfalle eingreifende Riegel der Verriegelungsklinke aus der Riegelfalle herausbewegt. Der zweite, typischerweise als Betätigungshandhabe ausgeführte Arm einer solchen Verriegelungseinrichtung befindet sich typischerweise mit einem größeren radialen Abstand zur Drehachse als die Verriegelungsklinke mit ihrem Riegel. Abgehoben wird bezüglich des Abstandes des zweiten Hebelarmes von der Drehachse auf den den über die Längserstreckung gemitteten Abstand. Gleiches gilt für den Abstand des ersten Hebelarmes von der Drehachse. Die Antriebswelle einer solchen Mischmaschine wird mit beträchtlichen Drehgeschwindigkeiten angetrieben. Drehgeschwindigkeiten mit einer Drehzahl von bis zu 1000 U/min sind nicht ungewöhnlich. Dieses bedeutet, dass auf die Verriegelungseinrichtung nennenswerte Zentrifugalkräfte (Fliehkräfte) wirken. Diese sind umso größer, je größer der Abstand von der Drehachse ist. Aufgrund des größeren Abstandes der Betätigungshandhabe von der Drehachse gegenüber dem ersten Hebelarm wirken auf die Betätigungshandhabe grö-ßere Zentrifugalkräfte. Da diese bei dem zweiten Hebelarm größer sind als bei dem ersten Hebelarm dient die auf die Betätigungshandhabe wirkende Zentrifugalkraft zugleich als Eingriffssicherung, durch die auf den Riegel der Verriegelungsklinke eine in radialer Richtung nach innen wirkende Kraft ausgeübt wird. Mithin wird durch diese Maßnahme in geschickter Weise die Rotationsgeschwindigkeit der Antriebswelle für die Sicherung der Verriegelung der beiden Wellen genutzt. Entsprechend schwächer braucht dann nur die Rückstellfeder ausgelegt zu sein, durch die somit nur eine Sicherung der Eingriffsstellung des Riegels in die Riegelfalle bei geringeren Umdrehungsgeschwindigkeiten oder bei ruhender Antriebswelle zu erfolgen hat.

Dasselbe, was vorstehend zu dem zweiten Arm der Verriegelungseinrichtung hinsichtlich seines Abstandes zur Drehachse beschrieben worden ist, lässt sich auch erreichen, wenn die Masse des zweiten Hebelarmes größer als die Masse des ersten Hebelarmes ist. Bevorzugt ist eine Kombination dieser beiden Maßnahmen zur Auslegung des zweiten Hebelarmes.

Bei einer Auslegung der Verriegelungseinrichtung als zweiarmiger Hebel, bei dem die Verriegelungsklinke den einen Hebelarm darstellt, kann als Feder eine Schenkelfeder eingesetzt werden, die einerseits gegen die nach innen weisende Seite des zweiten Hebelarmes und andererseits gegen die Außenseite der Antriebswelle bzw. ihres Werkzeugwellenanschlusses wirkt.

Aufgrund der bereits vorbeschriebenen möglichen Umdrehungsgeschwindigkeiten der Antriebswelle wird man die Verriegelungseinrichtung typischerweise so auslegen, dass durch diese keine Unwucht am Werkzeugwellenanschluss entsteht. Beim Vorsehen einer Werkzeugwellenverriegelung durch eine Verriegelungsklinke wird man daher mehrere Verriegelungsklinken in Umfangsrichtung mit jeweils gleichem Winkelabstand zueinander vorsehen. Bei einer Auslegung der Verriegelungseinrichtung mit zwei derartigen Verriegelungsklinken befinden sich diese an diametral einander gegenüberliegenden Positionen bezüglich der Drehachse der Antriebswelle.

Gemäß einer Ausführung einer solchen Mischmaschine ist der Werkzeugwellenanschluss der Antriebswelle als Hohlwelle ausgeführt. In diese greift das als Kupplungszapfen ausgebildete Kupplungsteil der Werkzeugwelle ein. Vorzugsweise verfügt bei einer solchen Ausgestaltung die Werkzeugwelle zur Begrenzung der Einsteckbewegung bei einer Montage der Werkzeugwelle an den Werkzeugwellenanschluss der Antriebswelle über einen in radialer Richtung auskragenden Anschlag, dessen Anschlagfläche gegen die Stirnfläche des Werkzeugwellenanschlusses wirkt. Dieser Anschlag kann umlaufend ausgeführt sein. Eine solche Auslegung erlaubt zwischen der umlaufenden Anschlagsfläche und der Stirnfläche des Werkzeugwellenanschlusses das Anordnen eines Dichtringes, beispielsweise eines O-Ringes. Durch den die Montagebewegung begrenzenden Anschlag ist das Kupplungsteil der Werkzeugwelle begrenzt.

Nachfolgend ist die Erfindung anhand eines konkreten Ausführungsbeispiels unter Bezugnahme auf die beigefügten Figuren beschrieben. Es zeigen:
- **Fig. 1**:: eine perspektivische Ansicht einer Mischmaschine mit einer gegenüber einer Gebindeaufnahme in vertikaler Richtung verfahrbaren Antriebseinheit,
- **Fig. 2:**: die Antriebseinheit der Mischmaschine der Figur 1 in Alleindarstellung,
- **Fig. 3:**: eine Längsschnittdarstellung der Antriebseinheit der Figur 2 mit der an dem Werkzeugwellenanschluss der Antriebswelle verriegelten Werkzeugwelle,
- **Fig. 4:**: eine Detaildarstellung der Antriebseinheit der Mischmaschine der Figur 1 mit dem Werkzeugwellenanschluss der Antriebswelle und der daran angeschlossenen Werkzeugwelle sowie eine Ausschnittsvergrößerung derselben mit einer Verriegelungseinrichtung zum Verriegeln der Werkzeugwelle gegenüber dem Werkzeugwellenanschluss und
- **Fig. 5:**: eine Längsschnittdarstellung der Antriebseinheit der Figur 2 mit der von dem Werkzeugwellenanschluss entriegelten Werkzeugwelle.

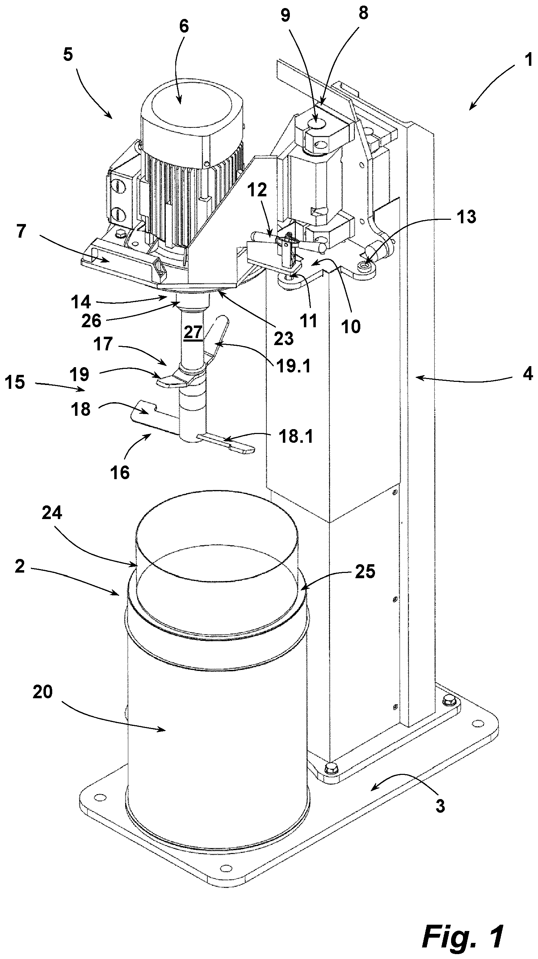

Eine industrielle Mischmaschine 1 verfügt über eine Gebindeaufnahme 2, die bei dem dargestellten Ausführungsbeispiel auf einer Grundplatte 3 starr befestigt ist. Auf der Grundplatte 3 ist neben der Gebindeaufnahme 2 eine Hubsäule 4 angeordnet, die eine insgesamt mit dem Bezugszeichen 5 gekennzeichnete Antriebseinheit trägt. Mittels der Hubsäule 4 ist die Antriebseinheit 5 in vertikaler Richtung verfahrbar. In Figur 1 befindet sich die Antriebseinheit 5 in ihrer oberen Endstellung. Die Antriebseinheit 5 umfasst als Antriebsaggregat einen Drehstromelektromotor 6. Der Motor 6 ist mechanisch angeschlossen an einen Motorträger 7, der unter Zwischenschaltung eines Schwenkgelenkes 8 an die Hubsäule 4 angeschlossen ist. Der Schwenkbolzen des Schwenkgelenkes 8 ist in Figur 1 mit dem Bezugszeichen 9 markiert. Somit kann der Elektromotor 6 um den Schwenkbolzen 9 aus seiner in Figur 1 gezeigten Stellung gegen den Uhrzeigersinn verstellt werden. Fixiert ist die in Figur 1 gezeigte Stellung durch einen eine feststehende Fixierplatte 10 durchgreifenden Fixierbolzen 11. Der Fixierbolzen 11 ist durch einen Stellhebel 12 anheb- und absenkbar und damit aus der verriegelten Stellung, wie dies in Figur 1 dargestellt ist, herausbewegbar. Zum Fixieren der anderen ausgeschwenkten Stellung des Elektromotors 6 dient eine weitere, der Fixierplatte 10 zugeordnete Fixierbohrung 13.

Auf der Antriebswelle 14 des Elektromotors 6 sitzt ein zweiteilig konzipiertes Mischwerkzeug 15. Das Mischwerkzeug 15 umfasst ein unteres Mischflügelwerkzeug und ein davon in Richtung zum Elektromotor 6 hin beabstandetes Hornwerkzeug 17. Die beiden Flügel 18, 18.1 des Mischflügelwerkzeuges 16 sind angestellt, weisen mithin gegenüber einer quer zur Längsachse der Antriebswelle 14 verlaufenden Ebene eine Neigung auf. Bezogen auf die Rotationsrichtung sind die beiden Flügel 18, 18.1 gleichsinnig angelenkt. Die beiden Hörner 19, 19.1 des Hornwerkzeuges 17 befinden sich bei dem dargestellten Ausführungsbeispiel in einem Winkelabstand etwa 90° zu der Ausrichtung der Flügel 18, 18.1 des Mischflügelwerkzeuges 16. Die Hörner 19, 19.1 sind gleichsinnig mit den Flügeln 18, 18.1 angestellt, wenn auch mit einem deutlich geringeren Neigungswinkel. Das Mischflügelwerkzeug 16 dient zum Erzeugen eines Mischgutstromes während des Betriebes der Mischmaschine 1.

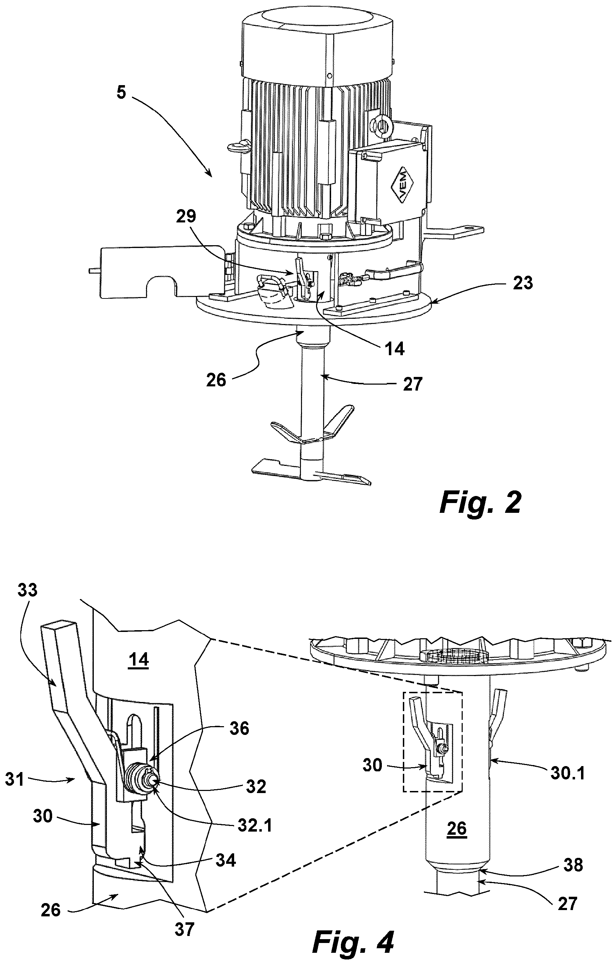

Die Mischmaschine 1 dient zum Mischen von Mischgut, das in einem Gebinde enthalten ist und auch für den Vorgang des Mischens in dem Gebinde verbleibt. Als diesbezügliches Gebinde kann beispielsweise ein Kunststoffsack oder auch ein Eimer oder jedes andere geeignete Behältnis dienen. Zum Fixieren des Gebindes in der Gebindeaufnahme 2, in der dieses für den Vorgang des Mischprozesses aufgenommen ist, verfügt die Gebindeaufnahme 2 über eine Unterdruckfixierung. Zu diesem Zweck ist bei dem dargestellten Ausführungsbeispiel die Gebindeaufnahme 2 in ihrem unteren Abschnitt doppelwandig aufgebaut, wie dieses in Figur 2 erkennbar ist. Durch die doppelwandige Ausbildung, wobei die äußere Wand mit dem Bezugszeichen 20 gekennzeichnet ist, wird eine Unterdruckkammer gebildet, aus der über einen Vakuumpumpenanschluss 22 zum Fixieren eines Gebindes in der Gebindeaufnahme 2 Luft abgezogen wird, mithin ein Unterdruck erzeugt wird. Die äußere Wand 20 ist abgedichtet an die Außenseite der Gebindeaufnahme 2 angeschlossen. Die Gebindeaufnahme 2 ist in seinem durch die äußere Wand 20 eingefassten Abschnitt mit einer Vielzahl, nach Art eines Rasters angeordneten Durchbrechungen versehen (in den Figuren nicht dargestellt). Dieses ist erforderlich, um das Gebinde an die Innenwand der Gebindeaufnahme 2 anzusaugen und dadurch zu fixieren.

Teil der Antriebseinheit 5 ist ein als Deckel 23 ausgebildeter Mischkopf. Dieser dient zum Verschließen der Gebindeaufnahme 2, wenn in dieser ein bei dem dargestellten Ausführungsbeispiel als Sack 24 ausgeführtes Gebinde eingesetzt ist. Der transparente Sack 24 ragt über die Gebindeaufnahme 2 hinaus. Dieser aus der Gebindeaufnahme 2 herausragende Abschnitt des Sackes 24 vor dem Verschließen der Gebindeaufnahme 2 mit dem Deckel 23 wird über die Außenwand 20 umgeschlagen. Zum Verschließen des Gebindes fährt die Antriebseinheit 5 mit seinen Mischwerkzeugen 15 in den Sack 24 und in das darin befindliche Mischgut ein, bis der Deckel 23 auf dem oberen Abschluss 25 der Behälteraufnahme 20 aufliegt. Der zwischen den oberen Abschluss 25 und dem Deckel 23 befindliche Abschnitt des Sackes 24 kann zugleich als Dichtung dienen. Durch das Umschlagen des oberen Abschnittes des Sackes 24 ist der obere Abschluss 25 der Gebindeaufnahme 2 vor einer Kontamination durch Mischgut geschützt.

Von der Antriebswelle 14 ist in Figur 1 sein unterer als Werkzeugwellenanschluss 26 ausgeführter unterer Endabschnitt erkennbar. Der Werkzeugwellenanschluss 26 ist als Hohlwelle ausgeführt. In den Werkzeugwellenanschluss 26 ist das Kupplungsteil der Werkzeugwelle 27 drehmomentschlüssig eingesetzt und darin verriegelt.

Der besseren Übersicht halber ist die Antriebseinheit 5 der Mischmaschine 1 mit ihrem als Mischkopf ausgebildeten Deckel 23 nochmals in Figur 2 in Alleinstellung gezeigt. Der Deckel 23 ist bei diesem Ausführungsbeispiel als Scheibe ausgeführt. Deutlich erkennbar ist in dieser Darstellung der Durchgriff der Antriebswelle 14 mit ihrem Werkzeugwellenanschluss 26 durch den Deckel 23. In diesem Durchgriff befindet sich eine umlaufende Dichtung, damit bei dem Vorgang des Mischens bei drehender Antriebswelle 14 aus dem durch den Deckel 23 verschlossenen Gebinde kein Mischgut und keine Mischgutstäube durch diese Durchbrechung hindurchtreten.

Die Werkzeugwelle 27 ist in ihrem oberen, in den Werkzeugwellenanschluss hineinreichenden Abschnitt als Kupplungsteil ausgeführt. Der als Hohlwelle ausgeführte Werkzeugwellenanschluss 26 hat entlang seines Umfanges eine der Längserstreckung folgende Mitnehmernut 28, in die eine als Mitnehmerrippe ausgebildete Einpassfeder des Kupplungsteils der Werkzeugwelle 27 zum drehmomentschlüssigen Anschluss derselben eingreift. Die Einpassfeder ragt in radialer Richtung von dem Kupplungsteil der Werkzeugwelle 27 nur in demjenigen Abschnitt ab, in dem dieses in den Werkzeugwellenanschluss 26 hineinragt. Die bezüglich ihrer Querschnittsgeometrie komplementär zu der Mitnehmernut 28 ausgeführte Mitnehmerrippe ist in den Figuren aufgrund der Perspektive nicht erkennbar. Die Querschnittsgeometrie der Mitnehmerrippe ist bei dem dargestellten Ausführungsbeispiel rechteckförmig mit abgerundeten Kanten. Auch andere Querschnittsgeometrien einer solchen Mitnehmernut sind durchaus möglich. Für die erleichterte Ineingriffstellung der Mitnehmerrippe in die Mitnehmernut 28 verfügt die Mitnehmernut 28 an ihrer zur Aufnahme des Kupplungsteils der Werkzeugwelle 27 weisenden Mündung über jeweils eine sich in Richtung zur Tiefe des Werkzeugwellenanschlusses 26 in axialer Richtung hin verjüngende Fase. Auch die Mitnehmerrippe des Kupplungsteils der Werkzeugwelle 27 ist an ihrem einsatzseitigen Ende mit zueinander geneigten Findungsfasen ausgestattet.

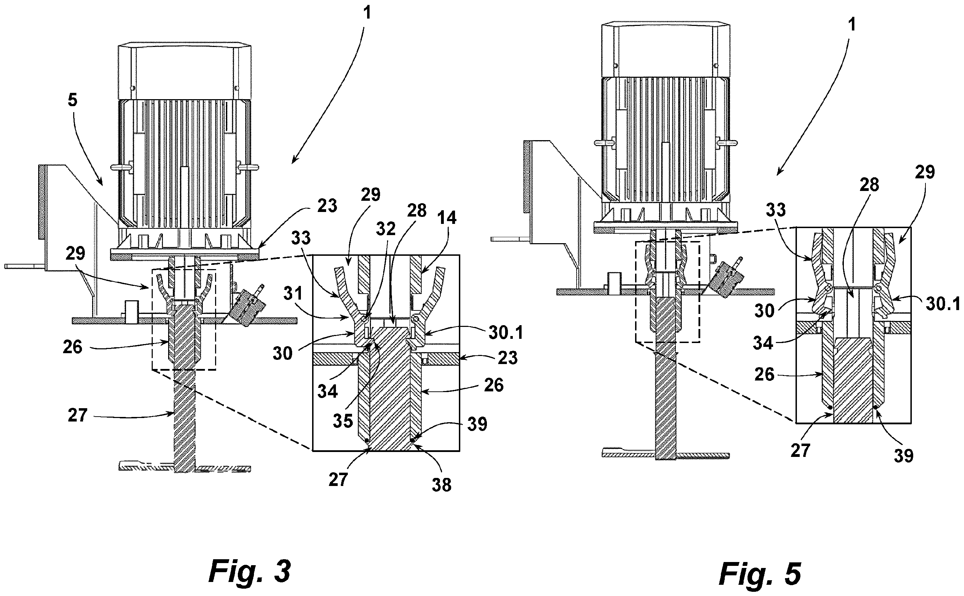

Die Mischmaschine 1 umfasst des Weiteren eine Verriegelungseinrichtung 29 zum Verriegeln des in den Werkzeugwellenanschluss 26 mit einer translatorischen Montagebewegung eingesetzten Kupplungsteils der Werkzeugwelle 27. Diese ist in der Ausschnittsvergrößerung der Figur 3 erkennbar. Bei der Verriegelungseinrichtung 29 des dargestellten Ausführungsbeispiels handelt es sich um zwei einander diametral zur Drehachse der Antriebswelle 14 gegenüberliegende Verriegelungsklinken 30, 30.1. Diese sind identisch aufgebaut. Nachfolgend wird die Verriegelungsklinke 30 näher beschrieben. Dieselben Ausführungen gelten gleichermaßen für die Verriegelungsklinke 30.1. Die Verriegelungsklinke 30 ist Teil eines zweiarmigen Hebels 31 und bildet dessen ersten Hebelarm. Der Hebeldrehpunkt ist in Figur 3 mit dem Bezugszeichen 32 kenntlich gemacht. Die Drehachse verläuft tangential zur Antriebswelle 14. Bereitgestellt wird die Drehachse durch einen in zwei Schenkeln eines Bockes gehaltenen Lagerstift 32.1 (siehe Figur 4). Der zweite Arm 33 des zweiarmigen Hebels 31 ist als Betätigungshandhabe ausgeführt und erstreckt sich in radialer Richtung von der Mantelfläche der Antriebswelle 14 bzw. des Werkzeugwellenanschlusses 26 weg.

Die Verriegelungsklinke 30 ist L-förmig ausgelegt und verfügt über einen in radialer Richtung abragenden Riegel 34, der in eine Riegelfalle 35 im Bereich des einsteckseitigen Endes des Kupplungsteils der Werkzeugwelle 27 eingreift. Bei dem dargestellten Ausführungsbeispiel ist die Riegelfalle 35 ein tangentialer Einschnitt in die Mantelfläche des Kupplungsteils. Die in Figur 3 gezeigte Stellung des zweiarmigen Hebels 31 ist durch eine Schenkelfeder 36 (siehe Figur 4) gesichert. Die Schenkelfeder 36 sitzt ebenfalls auf dem Lagerstift 32.1. An den Riegel 34 ist ein in axialer Richtung ausgestellter Anschlagnocken 37 angeformt, durch den das Eintauchen des Riegels 34 begrenzt ist. Der Anschlag 37 kommt zum Tragen, wenn in den Werkzeugwellenanschluss 26 kein Kupplungsteil einer Werkzeugwelle 27 eingreift.

Der Riegel 34 in das Innere des Werkzeugwellenanschlusses 26 weist an seiner in Figur 3 zur Werkzeugwelle 27 weisenden Seite eine Stellschräge auf. Ebenfalls ist das einsteckseitige Ende des Kupplungsteils der Werkzeugwelle 27 mit einer Fase ausgerüstet. Somit werden beim Einsetzen des Kupplungsteils der Werkzeugwelle 27 in den Werkzeugwellenanschluss 26 die Verriegelungsklinken 30, 31 ausgerückt, bis deren Riegel 34 in die jeweilige Riegelfalle 35 einfällt. Dann ist, wie in Figur 3 erkennbar, die Werkzeugwelle 27 in axialer Richtung mit dem Werkzeugwellenanschluss 26 verriegelt. Bei der Mischmaschine 1 dient die Verriegelungseinrichtung 29 alleinig diesem Zweck. Die Funktionalität der Drehmitnahme der Werkzeugwelle 27 bei einer Rotation der Antriebswelle 14 erfolgt über die dann mit der Mitnehmernut 28 in Eingriff gestellte Mitnehmerrippe.

Das Kupplungsteil der Werkzeugwelle 27 ist unterseitig durch einen umlaufenden Anschlag 38 begrenzt (siehe Figur 3). Die durch den Anschlag 38 bereitgestellte Anschlagfläche weist in Richtung zu dem Deckel 23 und wirkt gegen die untere Stirnseite des Werkzeugwellenanschlusses 26. Zwischen diesen beiden zusammenwirkenden Ringanschlagflächen ist ein O-Ring 39 als Dichtring angeordnet. Getragen wird der O-Ring 39 von der unteren Stirnfläche des Werkzeugwellenanschlusses 26. Darin ist der O-Ring in einer hinterschnittenen Aufnahme gehalten, aus der dieser mit einem Abschnitt herausragt, um gegen die durch den umlaufenden Anschlag 38 bereitgestellte Anschlagfläche zu wirken, wenn ein Mischwerkzeug an den Werkzeugwellenanschluss 26 angeschlossen ist.

Figur 4 zeigt die Verriegelungsklinke 30 in einer perspektivischen Ansicht von außen mit der von innen auf die Betätigungshandhabe 33 wirkenden Schenkelfeder 36 zum Sichern der Eingriffsstellung des Riegels 34 in die Riegelfalle 35. Wie vor allem der Darstellung in der Ausschnittsvergrößerung der Figur 4 erkennbar, ist die Länge des zweiten Hebelarms 33 größer als die Länge des ersten Hebelarms 30 des zweiarmigen Hebels 31. Aus diesem Grunde wirken auf den zweiten, als Betätigungshandhabe ausgelegten Hebelarm 33 bei einer Rotation der Antriebswelle 14 und damit des Werkzeugwellenanschlusses 26 höhere Zentrifugalkräfte als auf den ersten Hebelarm 30. Dabei bewirkt die größere Länge des Hebelarmes 33 auch, dass dieser zweite Hebelarm 33 eine größere Masse aufweist als der erste Hebelarm 30. Infolge dieser auf den zweiten Hebelarm 33 wirkenden höheren Zentrifugalkraft ist die Eingriffsstellung des Riegels 34 in die Riegelfalle 35 bei rotierender Antriebswelle 14, insbesondere mit höheren Umdrehungsgeschwindigkeiten zusätzlich gesichert. Aus diesem Grunde braucht durch die Schenkelfeder 36 auf den zweiten Arm 33 nur eine solche Sicherungskraft bereitgestellt zu sein, dass die Eingriffsstellung des Riegels 34 in die Riegelfalle 35 auch bei stehender Antriebswelle 14 oder bei einem Antrieb mit nur geringer Umdrehungsgeschwindigkeit gesichert ist.

Figur 5 zeigt die Verriegelungseinrichtung 29 mit den beiden entriegelten Verriegelungsklinken 30, 30.1. Ein Ausrücken der jeweiligen Riegel 34 ist werkzeuglos möglich, und zwar letztendlich einfach indem die beiden als Betätigungshandhaben ausgeführten zweiten Hebelarme 33 in Richtung zur Mantelfläche der Antriebswelle 14 mit einer Hand zusammengedrückt werden. Diese Stellung braucht nur so lange gehalten zu werden, bis die Werkzeugwelle 27 mit ihrem Kupplungsteil so weit mit der anderen Hand abgesenkt worden ist, dass die Riegelfallen 35 sich nicht mehr in der Flucht der Riegel 34 befinden. Ein Werkzeugwechsel ist somit problemlos von einer einzigen Person ausführbar.

Die vorstehende Beschreibung des Anschlusses der Werkzeugwelle 27 an die Antriebswelle 14 lässt deutlich werden, dass ein Werkzeugwechsel nicht nur denkbar einfach und damit auch rasch durchführbar ist, sondern dass auch eine unter Umständen notwendige Reinigung der inneren Mantelfläche des Werkzeugwellenanschlusses 26 problemlos möglich ist. Bei abgenommenen Werkzeugwelle 27 kann der Werkzeugwellenanschluss 26 innenseitig mit einem Fluid (Gas oder Flüssigkeit) gespült werden, die im Bereich der Verriegelungseinrichtung in das Innere eingeleitet wird, sollte dieses überhaupt erforderlich sein. Genutzt werden hierfür die zum Eingreifen der Riegel 34 in die Riegelfallen 35 ohnehin vorhandenen Öffnungen in dem Werkzeugwellenanschluss 26.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die beanspruchte Mischmaschine zu realisieren, ohne dass dies im Rahmen dieser Ausführungen im Einzelnen dargelegt werden müsste.

**Bezugszeichenliste**

| | | | |
|---|---|---|---|
| 1 | Mischmaschine | 32 | Hebeldrehpunkt |
| 2 | Gebindeaufnahme | 32.1 | Lagerstift |
| 3 | Grundplatte | 33 | Arm |
| 4 | Hubsäule | 34 | Riegel |
| 5 | Antriebseinheit | 35 | Riegelfalle |
| 6 | Elektromotor | 36 | Schenkelfeder |
| 7 | Motorträger | 37 | Anschlagnocken |
| 8 | Schwenkgelenk | 38 | Anschlag |
| 9 | Schwenkbolzen | 39 | O-Ring |
| 10 | Fixierplatte | | |
| 11 | Fixierbolzen | | |
| 12 | Stellhebel | | |
| 13 | Fixierbohrung | | |
| 14 | Antriebswelle | | |
| 15 | Mischwerkzeug | | |
| 16 | Mischflügelwerkzeug | | |
| 17 | Hornwerkzeug | | |
| 18, 18.1 | Flügel | | |
| 19, 19.1 | Horn | | |
| 20 | äußere Wand | | |
| 23 | Mischkopf, Deckel | | |
| 24 | Sack (Gebinde) | | |
| 25 | Abschluss | | |
| 26 | Werkzeugwellenanschluss | | |
| 27 | Werkzeugwelle | | |
| 28 | Mitnehmernut | | |
| 29 | Verriegelungseinrichtung | | |
| 30, 30.1 | Verriegelungsklinke | | |
| 31 | Hebel | | |

## Patentansprüche

1. Industrielle Mischmaschine zum Mischen eines pulvrigen oder granulatförmigen, in einem Behälter (2) enthaltenen Mischgutes umfassend einen Mischkopf (23), welcher Mischkopf (23) ein Antriebsaggregat (6) und eine von dem Antriebsaggregat (6) rotatorisch angetriebene, den Mischkopf (23) durchgreifende Antriebswelle (14) zum Antreiben eines eine Werkzeugwelle (27) aufweisenden Mischwerkzeuges (15) umfasst, wwelche Werkzeugwelle (27) zum Übertragen einer Rotationsbewegung der Antriebswelle (14) auf die Werkzeugwelle (27) mittels einer Anschlussmechanik lösbar drehmomentschlüssig an die Antriebswelle (14) anschliessbar ist, wobei die Antriebswelle (14) als Kupplungsteil einen den Mischkopf (23) durchgreifenden Werkzeugwellenanschluss (26) umfasst, in den oder auf den die Werkzeugwelle (27) mittels ihrem komplementär zu dem Werkzeugwellenanschluss (26) der Antriebswelle (14) ausgeführten Kupplungsteil mittels einer translatorischen Bewegung ein- bzw. aufsteckbar ist, wobei die beiden komplementären Kupplungsteile eine nicht rotationssymmetrische Querschnittsgeometrie zur drehmomentschlüssigen Ineingriffstellung derselben aufweisen, und dass der Werkzeugwellenanschluss (26) auf der Antriebsaggregatseite des Mischkopfes (23) eine Verriegelungseinrichtung (29) zum Verriegeln des mit dem Werkzeugwellenanschluss (26) der Antriebswelle (14) in Eingriff gestellten Kupplungsteils der Werkzeugwelle (27) umfasst,
**dadurch gekennzeichnet, dass**
der Mischkopf (23) ein als Deckel ausgebildeter Mischkopf (23) zum Verschließen der oberseitigen Öffnung des das zu mischende Mischgut enthaltenden Behälters ist.

2. Mischmaschine nach Anspruch 1, **dadurch gekennzeichnet, dass** die Verriegelungseinrichtung (29) über zumindest eine Verriegelungsklinke (30, 30.1) verfügt, die zum Verriegeln der Ineingriffstellung der Kupplungsteile mit ihrem in radialer Richtung verstellbaren Riegel (34) in jeweils eine Riegelfalle (35) des Kupplungsteils der Werkzeugwelle (27) eingreift.

3. Mischmaschine nach Anspruch 2, **dadurch gekennzeichnet, dass** die Eingriffsstellung des Riegels (34) in die Riegelfalle (35) durch eine Feder (36) gesichert ist.

4. Mischmaschine nach Anspruch 3, **dadurch gekennzeichnet, dass** die Verriegelungsklinke (30, 30.1) der eine Arm eines zweiarmigen Hebels (31) ist, dessen zweiter Arm (33) als Betätigungshandhabe ausgeführt ist, durch dessen Betätigung der Riegel (34) gegen die Kraft der Feder (36) aus seiner in die Riegelfalle (35) eingreifenden Stellung herausbringbar ist.

5. Mischmaschine nach Anspruch 4, **dadurch gekennzeichnet, dass** die Masse des zweiten Hebelarms (33) größer als die Masse des ersten Hebelarms (30) ist.

6. Mischmaschine nach Anspruch 4 oder 5, **dadurch gekennzeichnet, dass** der zweite Hebelarm (33) einen größeren gemittelten Abstand von der Drehachse der Antriebswelle (14) aufweist als der erste Hebelarm (30, 30.1).

7. Mischmaschine nach einem der Ansprüche 4 bis 6 in ihrem Rückbezug auf Anspruch 3, **dadurch gekennzeichnet, dass** als Feder (36) eine Federschenkel vorgesehen ist, deren Federkraft gegen die zur Drehachse der Antriebswelle (14) weisende Seite des zweiten Hebelarms (33) wirkt.

8. Mischmaschine nach einem der Ansprüche 2 bis 7, **dadurch gekennzeichnet, dass** die Verriegelungseinrichtung (29) über zwei einander diametral zur Drehachse des Werkzeugwellenanschlusses (26) gegenüberliegende Verriegelungsklinken (30, 30.1) verfügt.

9. Mischmaschine nach einem der Ansprüche 1 bis 8, **dadurch gekennzeichnet, dass** der Werkzeugwellenanschluss (26) der Antriebswelle (14) als Hohlwelle ausgeführt ist, in die das Kupplungsteil der Werkzeugwelle (27) eingreift.

10. Mischmaschine nach Anspruch 9, **dadurch gekennzeichnet, dass** das Kupplungsteil der Werkzeugwelle (27) in Richtung zu dem daran angeschlossenen Mischwerkzeug einen in radialer Richtung gegenüber dem Kupplungsteil abragenden Anschlag (38) zum Begrenzen der translatorischen Montagebewegung der Werkzeugwelle (27) an den Werkzeugwellenanschluss (26) der Antriebswelle (14) aufweist.

11. Mischmaschine nach Anspruch 10, **dadurch gekennzeichnet, dass** die Anschlagfläche umlaufend ausgeführt ist und zwischen der Anschlagfläche der Werkzeugwelle (27) und der Stirnfläche des Werkzeugwellenanschlusses (26) ein Dichtring (39) angeordnet ist.

12. Mischmaschine nach einem der Ansprüche 1 bis 11, **dadurch gekennzeichnet, dass** zum drehmomentschlüssigen Anschluss des Kupplungsteils der Werkzeugwelle (27) an den Werkzeugwellenanschluss (26) der Antriebswelle (14) einer der beiden Kupplungspartner eine radial vorspringende, sich in axialer Richtung erstreckende Mitnehmerrippe und der andere Kupplungspartner eine sich ebenfalls in axialer Richtung erstreckende Mitnehmernut (28) mit komplementärer Querschnittsgeometrie zu der Mitnehmerrippe aufweist.

13. Mischmaschine nach einem der Ansprüche 1 bis 12, **dadurch gekennzeichnet, dass** die Mischmaschine (1) als Sack- und Fassmischer ausgeführt ist.

## Claims

1. Industrial mixing machine for mixing a material that is contained in a container (2) in powder or granulate form, comprising a mixing head (23), this mixing head (23) comprising a drive device (6), and a drive shaft (14) which is driven rotationally by the drive device (6) and engages through the mixing head (23), for driving a mixing tool (15) having a tool shaft (27), the tool shaft (27) be detachably connected, by means of a connection mechanism with torque transfer, to the drive shaft (14), in order to transfer rotational movement of the drive shaft (14) to the tool shaft (27),
wherein the drive shaft (14) comprises, as a coupling part, a tool shaft connection (26) that engages through the mixing head (23), into or onto which the tool shaft (27) can be plug connected by means of its coupling part, configured as complementary to the tool shaft connection (26) of the drive shaft (14), by means of a translational movement, wherein the two complementary coupling parts exhibit a nonrotationally symmetrical cross-sectional geometry for the torque connection engagement into one another, and that the tool shaft connection (26) on the drive device side of the mixing head (23) comprises a locking device (29) for locking the coupling part of the tool shaft (27) which is in engagement with the tool shaft connection (26) of the drive shaft (14),
**characterised in that** the mixing head (23) is a mixing head (23) configured as a cover, for closing the upper side opening of the container containing the material that is to be mixed.

2. Mixing machine according to claim 1, **characterised in that** the locking device (29) has at least one locking latch (30, 30.1), which, in order to lock the mutual engagement position of the coupling parts, engages with its bolt (34), which in turn can be adjusted in the radial direction, engaging in each case into a bolt latch (35) of the coupling part of the tool shaft (27).

3. Mixing machine according to claim 2, **characterised in that** the engagement position of the bolt (34) into the bolt latch (35) is secured by a spring (36).

4. Mixing machine according to claim 3, **characterised in that** the locking latch (30, 30.1) is one arm of a two-armed lever (31), of which the second arm (33) is configured as an actuating handle, by the actuation of which the bolt (34) can be brought against the force of the spring (36) out of its position engaging into the bolt latch (35).

5. Mixing machine according to claim 4, **characterised in that** the mass of the second lever arm (33) is greater than the mass of the first lever arm (30).

6. Mixing machine according to claim 4 or 5, **characterised in that** the second lever arm (33) exhibits a greater distance interval from the rotation axis of the drive shaft (14) than the first lever arm (30, 30.1).

7. Mixing machine according to any one of claims 4 to 6 in reference to claim 3, **characterised in that** a spring limb is provided as a spring (36), of which the spring force takes effect against the side of the second lever arm (33) facing towards the rotation axis of the drive shaft (14).

8. Mixing machine according to any one of claims 2 to 7, **characterised in that** the locking device (29) is provided with two locking latches (30, 30.1) diametrically opposed to the rotation axis of the tool shaft connection (26).

9. Mixing machine according to any one of claims 1 to 8, **characterised in that** the tool shaft connection (26) of the drive shaft (14) is configured as a hollow shaft, into which the coupling part of the tool shaft (27) engages.

10. Mixing machine according to claim 9, **characterised in that** the coupling part of the tool shaft (27) comprises, in the direction towards the mixing tool which is connected to it, a stop (38), projecting in the radial direction opposite the coupling part, in order to limit the translational installation movement of the tool shaft (27) at the tool shaft connection (26) of the drive shaft (14).

11. Mixing machine according to claim 10, **characterised in that** the contact surface is configured as circumferential, and that a sealing ring (39) is arranged between the contact surface of the tool shaft (27) and the face surface of the tool shaft connection (26).

12. Mixing machine according to any one of claims 1 to 11, **characterised in that,** for the torque transfer connection of the coupling part of the tool shaft (27) to the tool shaft connection (26) of the drive shaft (14), one of the two coupling partners comprises a radially projecting drive rib, extending in the axial direction, and the other coupling partner comprises a drive groove (28), likewise extending in the axial direction and with complementary cross-section geometry to the drive groove.

13. Mixing machine according to any one of claims 1 to 12, **characterised in that** the mixing machine (1) is configured as a bag and barrel mixer.

## Revendications

1. Mélangeur industriel pour mélanger un matériau pulvérulent ou en granules contenu dans un conteneur (2), comprenant une tête de mélange (23), laquelle tête de mélange (23) comporte un groupe d'entraînement (6) et un arbre d'entraînement (14) traversant la tête de mélange (23), entraîné en rotation par le groupe d'entraînement (6), destiné à entraîner un outil de mélange (15) muni d'un arbre d'outil (27), lequel arbre d'outil (27) pouvant être raccordé, de manière amovible, solidaire en rotation, avec l'arbre d'entraînement (14) grâce à un mécanisme de raccordement, afin de transmettre un mouvement de rotation de l'arbre d'entraînement (14) à l'arbre d'outil (27), l'arbre d'entraînement (14) comprenant en guise de pièce de couplage un raccord (26) d'arbre d'outil traversant la tête de mélange (23), dans lequel ou sur lequel l'arbre d'outil (27) peut être fiché ou enfiché par un mouvement de translation grâce à sa pièce de couplage conformée de façon complémentaire par rapport au raccord (26) d'arbre d'outil de l'arbre d'entraînement (14), lesquelles deux pièces de couplage complémentaires présentant une géométrie de section non symétrique en rotation à des fins de réalisation d'une position d'engagement solidaire en rotation de celles-ci, et le raccord (26) d'arbre d'outil présentant, du côté du groupe d'entraînement de la tête de mélange (23), un dispositif de verrouillage (29) destiné à verrouiller la pièce de couplage de l'arbre d'outil (27) engagée dans le raccord (26) d'arbre d'outil de l'arbre d'entraînement (14), **caractérisé en ce que** la tête de mélange (23) est une tête de mélange (23) conformée en couvercle destinée à fermer l'ouverture sur le dessus du conteneur contenant le matériau à mélanger.

2. Mélangeur selon la revendication 1, **caractérisé en ce que** le dispositif de verrouillage (29) dispose d'au moins un loquet (30, 30.1) de verrouillage, qui s'engage, afin de verrouiller la position d'engagement des pièces de couplage, par son pêne (34) ajustable radialement, dans respectivement une gâche (35) de la pièce de couplage de l'arbre d'outil (27)

3. Mélangeur selon la revendication 2, **caractérisé en ce que** la position d'engagement du pêne (34) dans la gâche (35) est sécurisée par un ressort (36).

4. Mélangeur selon la revendication 3, **caractérisé en ce que** le loquet (30, 30.1) de verrouillage est une branche d'un levier (31) à deux branches, dont la seconde branche (33) est conformée en tant que pièce d'actionnement, grâce à l'actionnement de laquelle, le pêne (34) peut être extrait, contre la force du ressort (36), de sa position d'engagement dans la gâche (35).

5. Mélangeur selon la revendication 4, **caractérisé en ce que** la masse du second bras (33) de levier est plus importante que celle du premier bras (30) de levier.

6. Mélangeur selon la revendication 4 ou 5, **caractérisé en ce que** le second bras (33) de levier présente un écart moyen plus important par rapport à l'axe de rotation de l'arbre d'entraînement (14) que le premier bras (30, 30.1) de levier.

7. Mélangeur selon l'une des revendications 4 à 6, dans leur référence à la revendication 3, **caractérisé en ce qu'**il est prévu en tant que ressort (36) un ressort à branche, dont la force de ressort agit contre la face, orientée vers l'axe de rotation de l'arbre d'entraînement (14), de la seconde branche (33) de levier.

8. Mélangeur selon l'une des revendications 2 à 7, **caractérisé en ce que** le dispositif de verrouillage (29) dispose de deux loquets (30, 30.1) de verrouillage diamétralement opposés par rapport à l'axe de rotation du raccord (269) d'arbre d'outil.

9. Mélangeur selon l'une des revendications 1 à 8, **caractérisé en ce que** le raccord (26) d'arbre d'outil de l'arbre d'entraînement (14) est conformé en arbre creux dans lequel s'engage la pièce de couplage de l'arbre d'outil (27).

10. Mélangeur selon la revendication 9, **caractérisé en ce que** la pièce de couplage de l'arbre d'outil (27) présente en direction de l'outil de mélange fixé sur celui-ci, une butée (38) en saillie radiale par rapport à la pièce de couplage, destinée à limiter le mouvement de montage en translation de l'arbre d'outil (27) sur le raccord (26) de l'arbre d'outil de l'arbre d'entraînement (24).

11. Mélangeur selon la revendication 10, **caractérisé en ce que** la surface de butée est conformée de manière circonférentielle et qu'entre la surface de butée de l'arbre d'outil (27) et la face frontale du raccord (26) d'arbre d'outil est disposée une bague d'étanchéité (39).

12. Mélangeur selon l'une des revendications 1 à 11, **caractérisé en ce que,** pour réaliser le raccordement solidaire en rotation de la pièce de couplage de l'arbre d'outil (27) sur le raccord (26) d'arbre d'outil de l'arbre d'entraînement (14), l'un des deux partenaires de couplage présente une languette d'entraînement en saillie radiale, s'étendant dans le sens axial et que l'autre partenaire de couplage présente une rainure d'entraînement (28) s'étendant également dans le sens axial, avec une géométrie de section complémentaire à la languette d'entraînement.

13. Mélangeur selon l'une des revendications 1 à 12, **caractérisé en ce que** le mélangeur (1) est conformé en mélangeur pour produits conditionnés en sacs et en fûts.
